**Europäisches Patentamt**

**European Patent Office**

**Office européen des brevets**

(11) Veröffentlichungsnummer: **0 116 698**
**B1**

(12) # EUROPÄISCHE PATENTSCHRIFT

(45) Veröffentlichungstag der Patentschrift:
**19.02.86**

(51) Int. Cl.⁴: **A 01 B 29/06**

(21) Anmeldenummer: **83111929.2**

(22) Anmeldetag: **29.11.83**

(54) Zusatzwalze für Nachlaufgeräte.

(30) Priorität: **21.01.83 DE 3301984**

(43) Veröffentlichungstag der Anmeldung:
**29.08.84 Patentblatt 84/35**

(45) Bekanntmachung des Hinweises auf die Patenterteilung:
**19.02.86 Patentblatt 86/8**

(84) Benannte Vertragsstaaten:
**AT BE DE FR GB NL**

(56) Entgegenhaltungen:
**CA - A - 1 081 021**
**DE - U - 8 301 607**
**FR - A - 2 454 747**

(73) Patentinhaber: **H. Niemeyer Söhne GmbH & Co. KG,**
**Heinrich-Niemeyer-Strasse 52, D-4446 Hörstel (DE)**

(72) Erfinder: **Barlage, Bruno, Dipl.-Ing.,**
**Beethovenstrasse 13, D-4446 Hörstel (DE)**
Erfinder: **Werthmöller, Gregor,**
**Heinrich-Niemeyer-Strasse 4, D-4446 Hörstel (DE)**

(74) Vertreter: **Busse & Busse Patentanwälte,**
**Postfach 1226 Grosshandelsring 6, D-4500 Osnabrück**
**(DE)**

ACTORUM AG

## Beschreibung

Die Erfindung betrifft eine Zusatzwalze für zumindest eine Hauptpackerwalze umfassende Nachlaufgeräte zur Bodenbearbeitung gemäss dem Oberbegriff des Anspruchs 1.

Der Erfindung liegt die Aufgabe zugrunde, eine Zusatzwalze obiger Art zu schaffen, die leicht und einfach aus einer Betriebsstellung in eine Transportstellung und umgekehrt überführbar ist, wobei die Deichsel der Zusatzwalze ständig mit dem Anschlusspunkt am Rahmen der Hauptpackerwalze im Eingriff bleibt.

Diese Aufgabe wird bei einer Zusatzwalze nach dem Oberbegriff des Anspruchs 1 durch die Merkmale des Anspruchs 1 gelöst. Weitere bedeutsame Ausgestaltungen sind in den Ansprüchen 2 bis 16 angegeben.

Die erfindungsgemässe Stellvorrichtung ermöglicht es, die Umstellung aus einer Betriebsstellung in eine Transportstellung und umgekehrt nach Entriegeln der Stellvorrichtung einfach durch Zurücksetzen bzw. Vorziehen der Hauptpackerwalze mit Hilfe des Schleppers durchzuführen.

Mehrere Ausführungsbeispiele des Gegenstands der Erfindung sind in der Zeichnung näher veranschaulicht. Es zeigen:

Fig. 1 ein Nachlaufgerät, bestehend aus einer Hauptpackerwalze und einer daran angekoppelten Zusatzwalze nach der Erfindung in Seitenansicht,

Fig. 2 eine Draufsicht auf die Deichsel der Zusatzwalze gemäss Fig. 1 mit einer ersten Ausführungsform der erfindungsgemässen Stellvorrichtung in Vergrösserung,

Fig. 3 eine Draufsicht auf die Deichsel der Zusatzwalze mit einer zweiten Ausführungsform der Stellvorrichtung,

Fig. 4 eine Seitenansicht einer Zusatzwalze mit einer dritten Ausführungsform der Stellvorrichtung.

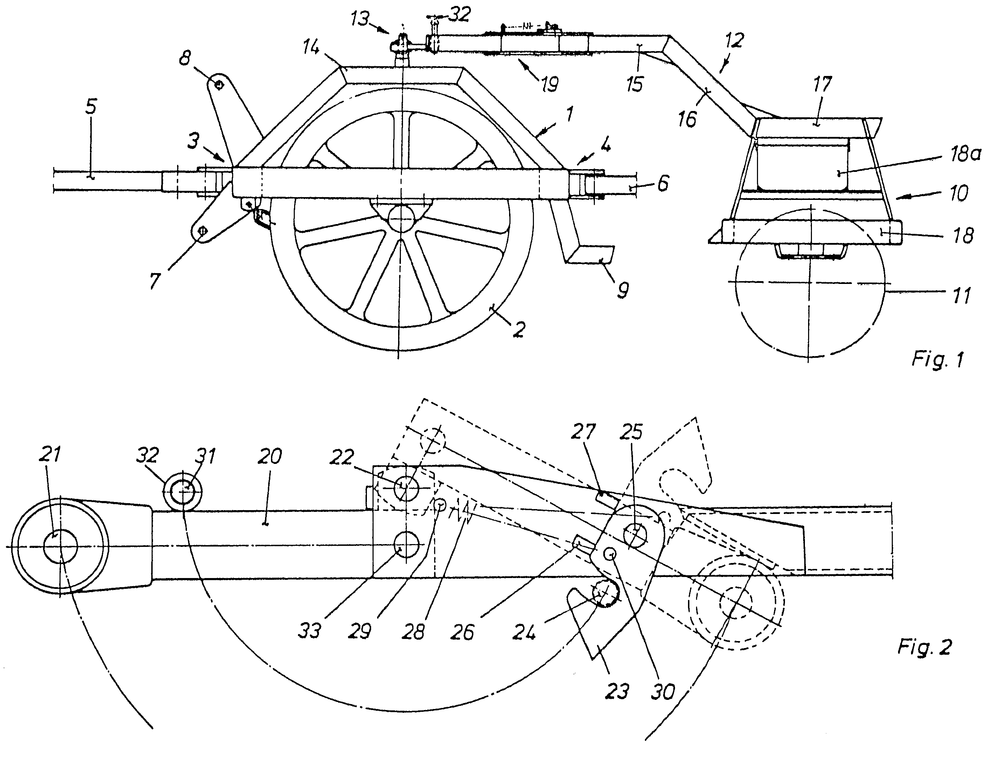

Das in Fig. 1 dargestellte, für Kehrpflüge vorgesehene Nachlaufgerät besitzt einen Rahmen 1, in dem eine Hauptpackerwalze 2 frei drehbar gelagert ist. Anstelle einer Hauptpackerwalze 2 können auch mehrere Hauptpackerwalzen hintereinander im Rahmen 1 abgestützt sein. Jede Hauptpackerwalze besteht dabei wie bekannt aus mehreren koaxial nebeneinander auf einer Trägerachse angeordneten Packerringen.

An den beiden in die entgegengesetzten Laufrichtungen des Nachlaufgerätes weisenden Rahmenseiten 3, 4, die von Rahmenquerstreben gebildet werden, ist je ein Fangzugarm 5 bzw. 6 vorgesehen, wobei die Fangzugarme 5, 6 über eine Kopplungsvorrichtung gegenläufig abwechselnd in eine Zug- oder eine Ruhestellung schwenkbar am Rahmen 1 angelenkt sind. In der Darstellung gemäss Fig. 1 befindet sich der Frangzugarm 5 in Zugstellung und der Fangzugarm 6 in Ruhestellung. Der Rahmen 1 ist auf seiner Rahmenseite 5 mit Anschlüssen 7, 8 für eine Ankupplung an die Dreipunkthebevorrichtung landwirtschaftlicher Schlepper versehen. An seiner der Rahmenseite 3 gegenüberliegenden Rahmenseite 4 ist der Rahmen 1 mit laufrichtungsparallel nach aussen vorstehenden Stützstreben 9 versehen.

Das Nachlaufgerät umfasst ferner einem Rahmen 10 mit zumindest einer darin frei drehbar gelagerten Zusatzwalze 11. Der Rahmen 10 ist mittels einer Deichsel 12 über eine Gelenkverbindung 13 mit dem Rahmen 1 verbindbar. Die Hauptachse der Gelenkverbindung 13 fällt mit einer gedachten senkrechten Mittelachse auf der Ebene des Rahmens 1 zusammen und die Gelenkverbindung 13 ist oberhalb der Hauptpackerwalze 2 an einem diese übergreifenden, laufrichtungsparallelen, in der Längsmittelebene des Rahmens 1 angeordneten Brückenträger 14 angeordnet. Die Gelenkverbindung 13 bildet ein Kugelgelenk, um im Betrieb Schwenkkippbewegungen des Rahmens 10 der Zusatzwalze 11 relativ zum Rahmen 1 zuzulassen, und umfasst einen aufrechten rahmenseitigen Zapfen und eine Gelenkkugel im unten näher erläuterten Anschlussauge der Deichsel 12.

Aus der in der Zeichnung veranschaulichten Stellung der Hauptpackerwalze 2 und der Zusatzwalze 11 ist bei Laufrichtunswechsel des Nachlaufgerätes der Rahmen 10 mitsamt seiner Deichsel 12 in einer Schwenkbewegung von etwa 180° um die Hauptachse der Gelenkverbindung 13 und den Rahmen 1 herum in eine Nachfolge-Wechselstellung zum Rahmen 1 des Nachlaufgerätes überführbar.

Die Deichsel 12 gemäss Fig. 1 weist eine in vertikaler Ebene abgekröpfte Form auf und besitzt einen oberen, horizontalen Schenkel 15 und einen Verbindungsschenkel 16, der in einen unteren, etwa horizontalen Schenkel 17 übergeht und dort mit dem Rahmen 10 der Zusatzwalze 11 verbunden ist. Der Rahmen 10 umfasst ferner untere, etwa waagerecht verlaufende Streben 18, die in einer Transportstellung der Teile des Nachlaufgeräts teilweise auf die am Rahmen 1 angebrachten Stützstreben 9 aufsetzbar sind. Oberhalb der Streben 18 des Rahmens 10 ist eine Aufnahmevorrichtung 18a für Zusatzgewichte vorgesehen, um z.B. die Andruckkraft der Zusatzwalze 11 den Bodenverhältnissen anpassen zu können. Zur wahlweisen Überführung der Zusatzwalze 11 aus der Betriebsstellung gemäss Fig. 1 in die durch ihre Aufsattelung auf dem Rahmen 1 erreichte Transportstellung umfasst die Deichsel 12 im Bereich ihres oberen waagerechten Schenkels 15 eine Stellvorrichtung 19. Eine erste Ausführungsform dieser Stellvorrichtung, und zwar die in Fig. 1 schematisch angedeutete, ist in Fig. 2 als Draufsicht näher veranschaulicht.

Die Stellvorrichtung 19 umfasst einen in einem einseitig offenen Hohlkammerprofil des Schenkels 15 der Deichsel 12 schwenkbeweglich um eine senkrechte Achse gelagerten Klapphebel 20, der an seinem freien Ende das Anschlussauge 21 zur Verbindung mit dem Rahmenanschlusspunkt trägt. Der Klapphebel 20 ist wahlweise aus einer durch ausgezogene Linien dargestellten Strecklage durch Schwenken um seine vertikale, zur Längsmittelachse der Deichsel 12 seitlich versetzte Klappachse 22 in eine um annähernd 180° versetzte, durch gestrichelte Linien angedeutete Knicklage schwenkbar.

Im vorderen Bereich des Schenkels 15 der Deichsel 12 ist eine federbelastete Rastklinke 23 angeordnet, die bei Erreichen der Knicklage des Klapphebels 20 mit einem am Klapphebel 20 angeordneten Riegelzapfen 24 selbsttätig in Verriegelungseingriff gelangt. Diese Rastklinke 23 lagert auf einem schenkelseitigen senkrechten Zapfen 25 und ist zwischen einer durch einen Anschlag 26 bestimmten Fangstellung, dargestellt durch ausgezogene Linien, und einer durch einen Anschlag 27 bestimmten Freigabestellung, dargestellt durch gestrichelte Linien, schwenkbar. In beiden Stellungen steht die Rastklinke 23 unter der Vorspannung einer Übertotpunktfeder 28, die zwischen einem schenkelseitigen Stift 29 und einem rastklinkenseitigen, exzentrisch zu dem eine Schwenkachse definierenden Zapfen 25 angeordneten Stift 30 eingehängt ist.

Der bereits erwähnte Riegelzapfen 24 ist als ein in eine seitlich des Klapphebels 20 angeordnete Hülse 31 einsteckbarer und nach oben hinausragender Stecker 32 ausgebildet, wie in der Seitenansicht gemäss Fig. 1 erkennbar ist. Zur Festlegung des Klapphebels 20 in der Strecklage ist der Stecker 32 aus seiner ersten, in der Hülse 31 befindlichen Stellung in eine zweite, nahe der Klappachse 22 befindliche Stellung über führbar, wobei der Stecker dort eine gemeinsame, durch den Klapphebel 20 und das Hohlkammerprofil des Schenkels 15 der Deichsel 12 geführte Bohrung 33 durchgreift und dabei den Klapphebel 20 gegenüber dem Schenkel 15 verriegelt. Die Vorbereitungen, um den Klapphebel 20 aus der Streckstellung in die gestrichelt gezeichnete Knickstellung zu bringen und auf diese Weise die Zusatzwalze von einer Betriebs- in eine Transportstellung zu überführen, bestehen lediglich darin, den Stecker 32 aus der Bohrung 33 in die Hülse 31 umzustecken und die Rastklinke 23 in die mit durchgezogenen Linien dargestellte Fangstellung zu schwenken.

Durch Rücksetzen des Rahmens 1 der Hauptpackerwalze 2 gelangt dann der Klapphebel 20 unter Beschreibung der strichpunktierten Schwenklinie in die gestrichelt angedeutete Knicklage, wobei die Rastklinke 23 nach Ausschwenken und anschliessendem Zurückschwenken den Riegelzapfen 24 in Riegeleingriff gelangen lässt und den Klapphebel 20 in dieser Weise festlegt.

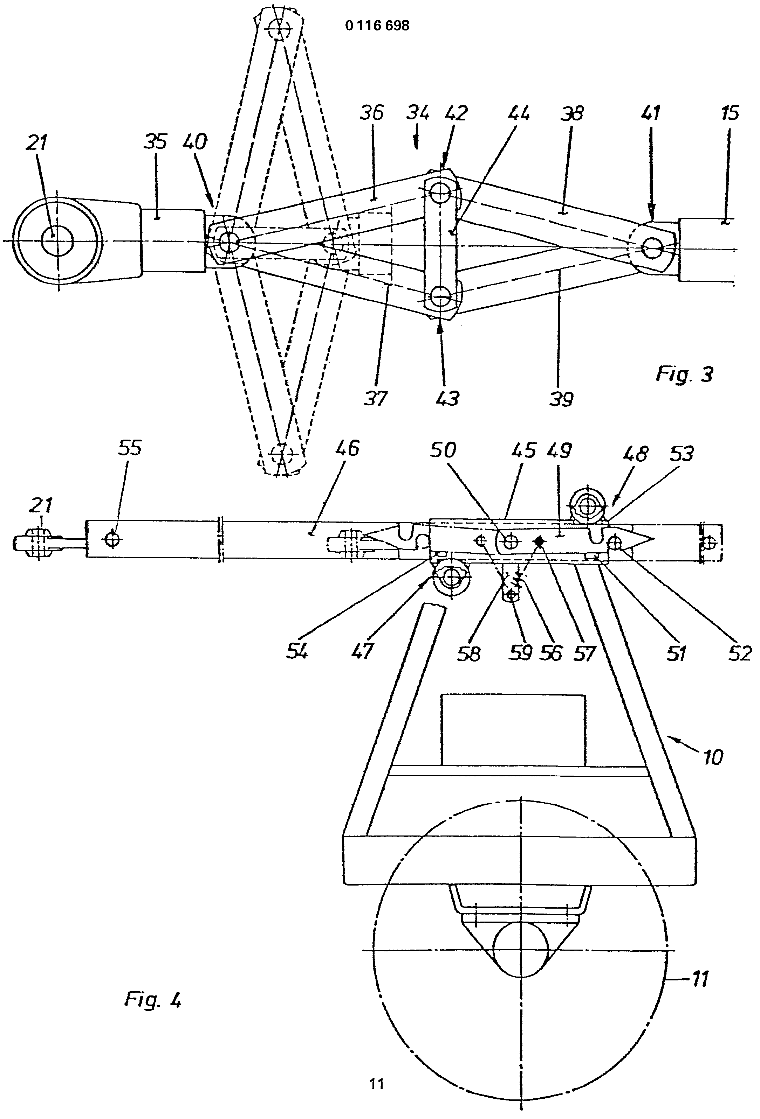

Fig. 3 zeigt als weitere Ausführungsform der Stellvorrichtung wiederum als Draufsicht auf die Deichsel 12 eine Viergelenkschere 34, die den das Anschlussauge 21 tragenden Teil 35 der Deichsel 12 mit dem starren Schenkel 15 verbindet. Die Viergelenkschere umfasst vier gleichlange Lenker 36, 37, 38, 39, von denen zwei ein gemeinsames Hauptgelenk 40 mit dem ausziehbaren Teil 35 der Deichsel 12 und zwei weitere ein gemeinsames Hauptgelenk 41 mit dem starren Schenkel 15 der Deichsel 12 bilden und zusätzlich jeweils ein freies Zwischengelenk 42 zwischen den Schenkeln 36 und 38 und ein weiteres freies Zwischengelenk 43 zwischen den Schenkeln 37 und 39 umfassen. Alle Gelenke 40 bis 43 sind von Zapfen gebildet und die jeweils gegenüberliegenden Hauptgelenke 40, 41 oder Zwischengelenke 42, 43 mittels einer umsetzbaren Riegellasche 44 in einem durch den Abstand von in der Riegellasche angeordneten Ausnehmungen bestimmten Abstand zueinander arretierbar. Auf diese Weise ist die Viergelenkschere 34 in einer mittels durchgezogener Linien dargestellten Auszugs- und durch gestrichelte Linien dargestellten Einschubstellung verriegelbar.

Fig. 4 zeigt als dritte Ausführungsform eine Stellvorrichtung in Seitenansicht, bestehen aus einer waagerechten, in einer mit dem Rahmen 10 der Zusatzwalze 11 verbundenen und dazu laufrichtungsparallel ausgerichteten Führungshülse 45 geführten Deichsel 46. Die Deichsel 46 ist in der Führungshülse 45 auf einer am in Laufrichtung liegenden Ende und unterhalb der Hülse 45 gelagerten Gleitrolle 47 sowie auf einer am entgegen Laufrichtung liegenden und oberhalb der Führungshülse 45 gelagerten Gleitrolle 48 geführt und mittels einer Rastklinke 49 verriegelbar.

Die Rastklinke 49 ist auf einem waagerechten, etwa senkrecht zur Längsmittelachse der Führungshülse 45 stehenden Zapfen 50 zwischen zwei um 180° versetzten und etwa parallel zur Längsmittelachse der Führungshülse 45 ausgerichteten Stellungen schwenkbeweglich gelagert. In der durch ausgezogene Linien dargestellten Transportraststellung weist die Rastklinke 49 entgegengesetzt zur Laufrichtung der Zusatzwalze 11 und steht unter Anlage an einem Anschlag 51 mit einem deichselseitigen rückwärtigen Riegelzapfen 52 in Eingriff. Der Riegelzapfen 52 liegt dabei gleichzeitig an dem der Laufrichtung abgewandten stirnseitigen Ende 53 der Hülse 45 an, so dass die Kraftübertragung in Zugrichtung über dieses Hülsenende 53 und nicht über die Rastklinke 49 selbst erfolgt.

In der anderen, durch strichpunktierte Linien gezeichneten Stellung steht die Rastklinke 49 unter Anlage an einem Anschlag 54 mit einem dem Anschlussauge 21 benachbarten Riegelzapfen 55 in Eingriff. Die Rastklinke 49 ist ähnlich wie die Ausführung in Fig. 2 in beiden Stellungen mittels einer Übertotpunktfeder 56 vorgespannt, die zwischen einem rastklinkenseitigen Stift 57 und einem auf einem unterhalb der Führungshülse 45 angebrachten Ausleger 58 befindlichen Stift 59 eingehängt ist.

Bei dieser Ausführung braucht zur Überführung der Zusatzwalze 11 aus einer Betriebsstellung in eine Transportstellung oder umgekehrt nur die Rastklinke 49 in die dieser Stellung zugeordnete Position geschwenkt zu werden, worauf mittels des Schleppers die Hauptpackerwalze 2 in Laufrichtung bzw. entgegen Laufrichtung der Zusatzwalze 11 verschoben wird und die Rastklinke 49 dann mit den zugehörigen Zapfen 52; 55 selbsttätig in Verriegelungseingriff gelangt, womit die Betriebs- bzw. die Transportstellung erreicht ist.

## Patentansprüche

1. Zusatzwalze (11) für zumindest eine Hauptpackerwalze (2) umfassende Nachlaufgeräte zur Bodenbearbeitung, insbesondere für Kehrpflüge, deren Rahmen (10) mittels einer Deichsel (12; 46) mit einem vorderen Anschlussauge (21) od. dgl. Anschlussorgan gelenkig an einem Anschlusspunkt (13) des Rahmens (1) der Hauptpackerwalze(n) (2) des Nachlaufgerätes anschliessbar ist, dadurch gekennzeichnet, dass die Deichsel (12; 46) der Zusatzwalze (11) eine Stellvorrichtung (19) umfasst, mittels der der Abstand des Anschlussauges (21) zum Rahmen (10) der Zusatzwalze (11) von Betriebsstellungslänge auf Transportstellungslänge und umgekehrt veränderbar ist.

2. Zusatzwalze nach Anspruch 1, dadurch gekennzeichnet, dass die Stellvorrichtung (19) im vorderen, an das Anschlussauge (21) rückseitig angrenzenden Bereich der Deichsel (12) vorgesehen ist.

3. Zusatzwalze nach Anspruch 1 oder 2, dadurch gekennzeichnet, dass die Deichsel (12) in ihrem vorderen Bereich von einem an seinem freien Ende das Anschlussauge (21) tragenden Klapphebel (20) gebildet ist, der um eine vertikale, zur Längsmittelachse der Deichsel (12) seitlich versetzte Klappachse (22) um annähernd 180° aus einer Strecklage zum Hauptteil der Deichsel (12) in eine Knicklage schwenkbar und in beiden Lagen verriegelbar ist.

4. Zusatzwalze nach Anspruch 3, dadurch gekennzeichnet, dass am vorderen Ende des Hauptteils der Deichsel (12) eine federbelastete Rastklinke (23) angeordnet ist, die bei Erreichen der Knicklage des Klapphebels (20) mit einem am Klapphebel angeordneten Riegelzapfen (24) selbsttätig in Verriegelungseingriff gelangt.

5. Zusatzwalze nach Anspruch 4, dadurch gekennzeichnet, dass die Rastklinke (23) aus einer Fangstellung für den Riegelzapfen (24) des Klapphebels (20) in eine Freigabestellung verschwenkbar ist.

6. Zusatzwalze nach Anspruch 4 oder 5, dadurch gekennzeichnet, dass die Rastklinke (23) unter Vorlast einer in Fang- und in Freigabestellung wirksamen Übertotpunktfeder (28) steht.

7. Zusatzwalze nach einem oder mehreren der Ansprüche 4 bis 6, dadurch gekennzeichnet, dass der Riegelzapfen (24) als Stecker (32) ausgebildet und aus einer ersten Stellung (31) nahe dem Anschlussauge (21) in eine zweite Stellung (33) umsetzbar ist, in der er nahe der Klappachse (22) den Klapphebel (20) in dessen Strecklage gegenüber dem Hauptteil der Deichsel (12) verriegelt.

8. Zusatzwalze nach Anspruch 1 oder 2, dadurch gekennzeichnet, dass die Stellvorrichtung (19) aus einer einen Teil der Deichsel (12) bildenden Viergelenkschere (34) besteht, die in einer Auszugs- und einer Einschubendstellung verriegelbar ist.

9. Zusatzwalze nach Anspruch 8, dadurch gekennzeichnet, dass zur Verriegelung der Viergelenkschere (34) eine umsetzbare Riegellasche (44) vorgesehen ist, mittels der wahlweise die in Zugrichtung hintereinander angeordneten Hauptgelenke (40, 41) oder die freien Zwischengelenke (42, 43) in ihrem jeweiligen Abstand zueinander arretierbar sind.

10. Zusatzwalze nach Anspruch 1, dadurch gekennzeichnet, dass die Deichsel (12) in einer mit dem Rahmen (10) der Zusatzwalze (11) verbundenen, laufrichtungsparallel ausgerichteten Führungshülse (45) verschieb- und dieser gegenüber verriegelbar ist.

11. Zusatzwalze nach Anspruch 10, dadurch gekennzeichnet, dass die Deichsel (12) mit einem vorderen und einem rückwärtigen Riegelzapfen (55; 52) versehen und an der Führungshülse (45) eine wahlweise mit einem der beiden Riegelzapfen (55; 52) selbsttätig in Riegeleingriff überführbare, unter Vorlast einer Übertotpunktfeder (56) stehende Rastklinke (49) angelenkt ist.

12. Zusatzwalze nach einem oder mehreren der Ansprüche 1 bis 11, dadurch gekennzeichnet, dass die Deichsel (12) mit einem Anschlusspunkt (13) am Rahmen (1) der Hauptpackerwalze(n) (2) verbindbar ist, der etwa mit einer gedachten senkrechten Mittelachse auf der Rahmenebene der Hauptpackerwalze(n) (2) zusammenfällt und oberhalb der Hauptpackerwalze(n) (2) angeordnet ist, und dass bei Laufrichtungswechsel des Nachlaufgerätes der Rahmen (10) der Zusatzwalze (11) mitsamt seiner Deichsel (12) in einer Schwenkbewegung von etwa 180° um die Hauptachse des Anschlusspunktes (13) und den Rahmen (1) der Hauptpackerwalze(n) (2) herum in eine Nachfolgewechselstellung zu der/den Hauptpackerwalze(n) (2) überführbar ist.

13. Zusatzwalze nach einem oder mehreren der Ansprüche 1 bis 12, dadurch gekennzeichnet, dass das Anschlussauge (21) der Deichsel (12) eine Gelenkkugel umfasst, die mit einer Zentralbohrung versehen und auf einen vertikal von einem Brückenträger (14) des Rahmens (1) der Hauptpackerwalze(n) (2) hochstehenden Anschlusszapfen als Anschlusspunkt (13) aufsetz- und auf diesem festlegbar ist.

14. Zusatzwalze nach einem oder mehreren der Ansprüche 1 bis 13, dadurch gekennzeichnet, dass der Rahmen (1) für die Hauptpackerwalze(n) (2) auf einer seiner in die Laufrichtung des Nachlaufgerätes weisenden Rahmenseiten (3) mit an sich bekannten Anschlüssen (7, 8) für eine Ankupplung an die Dreipunkthebevorrichtung eines landwirtschaftlichen Schleppers versehen ist, und dass der obere Anschluss (8) unterhalb einer gedachten horizontalen Ebene durch den Anschlusspunkt (13) für die Deichsel (12) der Zusatzwalze (11) angeordnet ist.

15. Zusatzwalze nach einem oder mehreren der Ansprüche 1 bis 14, dadurch gekennzeichnet, dass der Rahmen (1) für die Hauptpackerwalze(n) (2) an seiner der Rahmenseite (3) mit den Anschlüssen (7, 8) für die Dreipunkthebevorrichtung des Schleppers gegenüberliegenden Rahmenseite (4) mit laufrichtungsparallel nach aussen vorstehenden Stützstreben (9) versehen ist, auf denen der Rahmen (10) der Zusatzwalze (11) in Transportstellung des Nachlaufgerätes aufsetzbar ist.

16. Zusatzwalze nach einem oder mehreren der Ansprüche 1 bis 15, dadurch gekennzeichnet, dass der Rahmen (10) der Zusatzwalze (11) eine Aufnahmevorrichtung (18a) für Zusatzgewichte umfasst.

## Claims

1. An auxiliary roll (11) for following equipment for cultivation of the soil comprising at least one main packer roll (2), particularly for one-way ploughs, the frame (10) of which can be articulately connected to a connection point (13) of the frame (1) of the main packer roll(s) (2) by means of a pole (12, 46) having a connecting eye (21) or the like connecting member at the front, characterized in that the pole (12, 46) of the auxiliary roll (11) comprises an adjusting device (19) by means of which the distance of the connecting eye (21) from the frame (10) of the auxiliary roll (11) can be altered from the length for the operating position to the length for the transport position and *vice versa*.

2. An auxiliary roll as claimed in claim 1, characterized in that the adjusting device (19) is provided in the front region of the pole (12), adjacent to the rear of the connecting eye (21).

3. An auxiliary roll as claimed in claim 1 or 2, characterized in that the pole (12) is formed, in its front region, by a hinged lever (20) which carries the connecting eye (21) at its free end and which can be pivoted about a vertical hinge pin (22), offset laterally in relation to the longitudinal central axis of the pole (12), through approximately 180° out of an extended position in relation to the main part of the pole (12) into an angled position and can be locked in both positions.

4. An auxiliary roll as claimed in claim 3, characterized in that disposed at the front end of the main portion of the pole (12) is a spring-loaded detent (23) which, when the hinged lever (20) reaches the angled position, automatically comes into locking engagement with a locking pin (24) disposed on the hinged lever.

5. An auxiliary roll as claimed in claim 4, characterized in that the detent (23) can be swung out of a catch position for the locking pin (24) of the hinged lever (20) into a release position.

6. An auxiliary roll as claimed in claim 4 or 5, characterized in that the detent (23) is subject to the initial loading of an over-dead-centre spring (28).

7. An auxiliary roll as claimed in any of claims 4 to 6, characterized in that the locking pin (24) is constructed in the form of a knock-out pin (32) and can be transferred from a first position (31) close to the connecting eye (21) into a second position (33) in which, close to the hinge pin (22), it locks the hinged lever (20) in its extended position in relation to the main part of the pole (12).

8. An auxiliary roll as claimed in claim 1 or 2, characterized in that the adjusting device (19) consists of a parallelogram of links (34) which forms part of the pole (12) and which can be locked in an extended position and in a retracted position.

9. An auxiliary roll as claimed in claim 8, characterized in that a transferable locking bar (44) is provided to lock the parallelogram of links (34), by means of which locking bar either the main articulations (40, 41) disposed one behind the other in the pulling direction or the free intermediate articulations (42, 43) can be selectively locked in their particular distance apart.

10. An auxiliary roll as claimed in claim 1, characterized in that the pole (12) is displaceable in and can be locked in relation to a guide sleeve (45) which is connected to the frame (10) of the auxiliary roll (11) and is aligned parallel to the direction of travel.

11. An auxiliary roll as claimed in claim 10, characterized in that the pole (12) is provided with a front and a rear locking pin (55, 52) and a detent (49), which can be transferred automatically into locking engagement with one of the two locking pins (55, 52) selectively and is subject to the initial loading of an over-dead-centre spring (56), is articulated on the guide sleeve (45).

12. An auxiliary roll as claimed in any of claims 1 to 11, characterized in that the pole (12) can be connected to a connecting point (13) on the frame (1) of the main packer roll(s) (2), which coincides substantially with an imaginary vertical centre axis on the frame plane of the main packer roll(s) (2) and is disposed above the main packer roll(s) (2), and in that on a change of direction of travel of the following equipment, the frame (10) of the auxiliary roll (11) together with its pole (12) can be transferred, in a pivotal movement of about 180° about the main axis of the connecting point (13) and the frame (1) of the main packer roll(s) (2), into an alternative following position in relation to the main packer roll(s) (2).

13. An auxiliary roll as claimed in any of claims 1 to 12, characterized in that the connecting eye (21) of the pole (12) comprises a spherical joint member which is provided with a central bore and which can be placed on and located on a connecting pin projecting vertically from a bridge girder (14) of the frame (1) of the main packer roll(s) (2), as a connecting point (13).

14. An auxiliary roll as claimed in any of claims 1 to 13, characterized in that the frame (1) for the main packer roll(s) (2) is provided, at its frame sides (3) facing in the direction of travel of the following equipment, with connections (7, 8) known *per se* for attachment to the three-point lifting device of an agricultural tractor, and that the upper connection (8) is disposed below an imaginary horizontal plane through the connecting point (13) for the pole (12) of the auxiliary roll (11).

15. An auxiliary roll as claimed in any of claims 1 to 14, characterized in that the frame (1) for the main packer roll(s) (2) is provided, at its frame side (4) opposite the frame side (3) with the connections (7, 8) for the three-point lifting device of the tractor, with supporting struts (9) projecting outwards parallel to the direction of travel, on which struts the frame (10) of the auxiliary roll (11) can be placed in the transport position of the following equipment.

16. An auxiliary roll as claimed in any of claims 1 to 15, characterized in that the frame (10) of the auxiliary roll (11) comprises a receiving device (18a) for auxiliary weights.

**Revendications**

1. Rouleau complémentaire (11) pour un appareil traîné comprenant au moins un rouleau tasseur principal (2) pour le travail du sol et en particulier pour des charrues réversibles, dont le châssis (10) peut être, au moyen d'un timon (12; 46) qui présente un œil de couplage antérieur (21) ou un organe de couplage analogue, articulé à un point de couplage (13) du châssis (1) du ou des rouleaux tasseurs principaux (2) de l'appareil traîné, caractérisé en ce que le timon (12; 46) du rouleau complémentaire (11) comprend un dispositif de positionnement (19) au moyen duquel la distance séparant l'œil de couplage (21) du châssis (10) du rouleau complémentaire (11) peut être modifiée de la longueur correspondant à la position de travail à celle correspondant à la position de transport et inversement.

2. Rouleau complémentaire suivant la revendication 1, caractérisé en ce que le dispositif de positionnement (19) est prévu dans la zone antérieure du timon (12) adjacente à l'arrière de l'œil de couplage (21).

3. Rouleau complémentaire suivant la revendication 1 ou 2, caractérisé en ce que le timon (12) est formé, dans sa zone antérieure, d'un levier pliant (20) portant à son extrémité libre l'œil de couplage (21) et qui peut pivoter autour d'un axe de pliage (22) vertical décalé latéralement par rapport à l'axe longitudinal central du timon (12), d'environ 180° à partir d'une position étendue par rapport à la partie principale du timon (12) vers une position pliée et peut être verrouillé dans les deux positions.

4. Rouleau complémentaire suivant la revendication 3, caractérisé en ce qu'à l'extrémité antérieure de la partie principale du timon (12) est monté un cliquet d'arrêt (23) sollicité par ressort qui, lorsque le levier pliant (20) atteint sa position pliée, vient en prise de verrouillage automatiquement avec un doigt de verrouillage (24) monté sur le levier pliant.

5. Rouleau complémentaire suivant la revendication 4, caractérisé en ce que le cliquet d'arrêt (23) peut pivoter à partir d'une position d'accrochage du doigt de verrouillage (24) du levier pliant (20) vers une position de libération.

6. Rouleau complémentaire suivant la revendication 4 ou 5, caractérisé en ce que le cliquet d'arrêt (23) est soumis à la sollicitation préalable d'un ressort de dépassement de point mort (28) agissant dans la position d'accrochage et dans la position de libération.

7. Rouleau complémentaire suivant l'une quelconque des revendications 4 à 6, caractérisé en ce que le doigt de verrouillage (24) a la forme d'une fiche (32) et peut être commuté à partir d'une première position (31) proche de l'œil de couplage (21) dans une seconde position (33), dans laquelle il verrouille près de l'axe de pliage (22) le levier pliant (20) dans sa position étendue par rapport à la partie principale du timon (12).

8. Rouleau complémentaire suivant la revendication 1 ou 2, caractérisé en ce que le dispositif de positionnement (19) est formé d'un quadrilatère articulé (34) formant une partie du timon (12) qui peut être verrouillée dans une position étendue et dans une position rétractée.

9. Rouleau complémentaire suivant la revendication 8, caractérisé en ce que pour verrouiller le quadrilatère articulé (34), un loquet commutable (44) est prévu, au moyen duquel les biellettes principales (40, 41) disposées l'une derrière l'autre dans le sens de la traction ou les biellettes intermédiaires libres (42, 43) peuvent être arrêtées sélectivement l'une par rapport à l'autre dans leur position voulue.

10. Rouleau complémentaire suivant la revendication 1, caractérisé en ce que le timon (12) peut être déplacé dans une douille de guidage (45) reliée au châssis (10) du rouleau complémentaire (11) et orientée parallèlement à la direction de déplacement du rouleau et peut être verrouillé par rapport à celle-ci.

11. Rouleau complémentaire suivant la revendication 10, caractérisé en ce que le timon (12) est pourvu d'un doigt de verrouillage antérieur et d'un doigt de verrouillage postérieur (55; 52) et un cliquet d'arrêt (49) pouvant être commuté sélectivement et automatiquement en prise de verrouillage avec un des deux doigts de verrouillage (55; 52) est articulé à la douille de guidage et est soumis à la précontrainte d'un ressort de dépassement de point mort (56).

12. Rouleau complémentaire suivant l'une quelconque des revendications 1 à 11, caractérisé en ce que le timon (12) peut être relié par un point de couplage (13) au châssis (1) du ou des rouleaux tasseurs principaux (2), le point de couplage coïncidant à peu près avec un axe central vertical imaginaire abaissé sur le plan du châssis du ou des rouleaux tasseurs principaux (2) et étant disposé au-dessus du ou des rouleaux tasseurs principaux (2), et, dans le cas d'un changement de la direction de déplacement de l'appareil traîné, le châssis (10) du rouleau complémentaire (11) peut être commuté en compagnie de son timon (12) suivant un mouvement de pivotement d'environ 180° autour de l'axe principal du point de couplage (13) et du châssis (1) du ou des rouleaux tasseurs principaux (2) dans une position résultante modifiée par rapport au ou aux rouleaux tasseurs principaux (2).

13. Rouleau complémentaire suivant l'une quelconque des revendications 1 à 12, caractérisé en ce que l'œil de couplage (21) du timon (12) comprend une rotule d'articulation qui est pourvue d'une forure centrale et peut être posée et fixée sur un pivot de couplage servant de point de couplage (13), qui se dresse verticalement sur un longeron formant pont (14) du châssis (1) du ou des rouleaux tasseurs principaux (2).

14. Rouleau complémentaire suivant l'une quelconque des revendications 1 à 13, caractérisé en ce que le châssis (1) pour le ou les rouleaux tasseurs principaux (2) est pourvu, sur un de ses côtés (3) orientés dans la direction de déplacement de l'appareil traîné, d'organes de couplage (7, 8) bien connus pour un accouplement au dispositif de relevage à trois points d'un tracteur agricole et l'organe de couplage supérieur (8) est disposé en dessous d'un plan horizontal imaginaire passant par le point de couplage (13) pour le timon (12) du rouleau complémentaire (11).

15. Rouleau complémentaire suivant l'une quelconque des revendications 1 à 14, caractérisé en ce que le châssis (1) pour le ou les rouleaux tasseurs principaux (2) est pourvu, à son côté (4) opposé au côté (3) pourvu des organes de couplage (7, 8) pour le dispositif de relevage à trois points du tracteur, de béquilles d'appui (9) qui s'étendent vers l'extérieur parallèlement à la direction de déplacement et sur lesquelles le châssis (10) du rouleau complémentaire (11) peut être posé dans la position de transport de l'appareil traîné.

16. Rouleau complémentaire suivant l'une quelconque des revendications 1 à 15, caractérisé en ce que le châssis (10) du rouleau complémentaire (11) comprend un dispositif récepteur (18a) pour des poids supplémentaires.

Fig. 1

Fig. 2

0 116 698

0 116 698

Fig. 3

Fig. 4